# EUROPÄISCHE PATENTSCHRIFT

(11) **EP 1 460 028 B1**
(45) Veröffentlichungstag und Bekanntmachung des Hinweises auf die Patenterteilung: **06.09.2006**
(21) Anmeldenummer: 03029435.9
(22) Anmeldetag: 19.12.2003
(51) Int. Cl.: B67C 7/00

(54) **Rotationssterilisator und -füller**
Rotary sterilizing and filling machine
Machine de stérilisation et de remplissage à carrousel

(30) Priorität: 19.03.2003 DE 20304296 U
(43) Veröffentlichungstag der Anmeldung: 22.09.2004
(73) Patentinhaber: Salda, Luciano, 41058 Vignola (MO) (IT)
(72) Erfinder: Salda, Luciano, 41058 Vignola (MO) (IT)
(74) Vertreter: Grünecker, Kinkeldey, Stockmair & Schwanhäusser Anwaltssozietät

(56) Entgegenhaltungen:
- DE-A- 1 642 102
- DE-B- 1 105 746
- DE-U- 20 204 820
- FR-A- 2 818 615
- GB-A- 1 016 360
- US-B1- 6 354 427

## Beschreibung

Die vorliegende Erfindung bezieht sich auf einen Rotationsfüller gemäß dem Oberbegriff des Anspruches 1.

Solche Rotationsfüller sind aus der Praxis wohlbekannt. Sie dienen zum Füllen von Behältern, insbesondere Flaschen, mit Flüssigkeiten. Wenn es sich bei den Flüssigkeiten um Getränke handelt, so ist es erforderlich, die Behälter vor dem Befüllen zu sterilisieren. Zu diesem Zweck werden die leeren Behälter üblicherweise an ein Sterilisierkarussell geführt, an dem sie mittels eines Sterilisiergases oder Sterilisierfluids sterilisiert werden. Sind die Behälter keimfrei, so werden sie an ein Füllkarussell weitergeleitet. Dabei ist zu beachten, dass der Transport der Behälter vom Sterilisierkarussell zum Füllkarussell in einer sterilen Umgebung erfolgt, damit sich nicht erneut Keime am Behälter anlagern.

Eine sterile Atmosphäre wird üblicherweise dadurch geschaffen, dass das Sterilisierkarussell und das Füllkarussell in einem gemeinsamen Raum untergebracht sind, der mittels eines ständigen Stromes von Sterilluft durchspült wird. Dieser Raum muss groß genug sein, um das Sterilisierkarussell, das Füllkarussell sowie die dazwischenliegende Transportstrecke zu umfassen. Die Größe des Sterilraumes führt jedoch dazu, dass große Mengen an Sterilluft benötigt werden. Dies wiederum führt dazu, dass nicht nur ein hoher Platzbedarf, sondern auch hohe Kosten durch den Betrieb der Füllanlage entstehen.

Ein Rotationsfüller gemäß dem Oberbegriff des Anspruchs 1 zum Sterilisieren und Füllen von Behältern ist aus der DE 1 642 102 bekannt. Bei diesem bekannten Rotationsfüller ist ein Karussell vorgesehen, entlang dessen Umfang die Behälter transportiert werden. Bei dieser Bewegung werden die Behälter nacheinander sterilisiert und befüllt. Sterilisation und Befüllen finden somit an ein und demselben Karussell statt.

Aufgabe der vorliegenden Erfindung ist es, auf konstruktiv einfache Weise den aus der DE 1 642 102 bekannten Rotationsfüller so zu verbessern, dass das Befüllen effizienter und kostengünstiger durchgeführt werden kann.

Diese Aufgabe wird gelöst durch einen Rotationsfüller mit den Merkmalen des Anspruchs 1.

Erfindungsgemäß sind das Sterilisierkarussell und das Füllkarussell nicht länger identisch, sondern sie sind als separate Baugruppen des Rotationsfüllers ausgebildet. Dies hat den Vorteil, dass trotz einer deutlichen Verkleinerung des Sterilisierkarussells und des Füllkarussells jeweils gegenüber dem einzigen Karussell der DE 1 642 102 dennoch die gleiche Länge einer Sterilisier- und Befüllstrecke für die Behälter zur Verfügung gestellt werden kann, wenn die Behälter nacheinander das Sterilisierkarussell und das Füllkarussell durchlaufen. Zudem können bei der Erfindung die Bewegungsbahnen der Behälter entlang des Sterilisierkarussells und des Füllkarussells konzentrisch bzw. ineinander verschränkt realisiert werden, so dass sich der gesamte Raumbedarf für den Rotationsfüller verringert.

Bei dem erfindungsgemäßen Rotationsfüller liegen die Rotationsachsen des Sterilisierkarussells und des Füllkarussells im Wesentlichen deckungsgleich. Sie könnten sogar auch identisch sein. Dies bedeutet, dass der Platzbedarf für den Rotationsfüller bedeutend gesenkt wird, da die beiden Karussells jetzt nicht mehr nebeneinander, sondern gleichsam ineinander verschränkt realisiert werden können. Mit dem verringerten Raumbedarf für den Rotationsfüller verringert sich auch das Volumen, das während der Sterilisierung und Befüllung steril gehalten werden muss. Daher lässt sich der Betrieb des erfindungsgemäßen Rotationsfüllers deutlich kostengünstiger durchführen, als dies bisher der Fall war.

In einer anderen Betrachtungsweise kann der Vorteil des erfindungsgemäßen Rotationsfüllers darin gesehen werden, dass ein gegebenes Volumen einer sterilen Umgebung optimal ausgenutzt wird, indem für den zu befüllenden Behälter ein möglichst langer Bearbeitungsweg innerhalb dieses Volumens zur Verfügung gestellt wird. Dies wird dadurch erreicht, dass die Bewegungsbahnen entlang des Sterilisierkarussells und des Füllkarussells nicht länger nebeneinander angeordnet sind, sondern stattdessen ineinander oder übereinander.

In einer Ausführungsvariante der Erfindung haben das Sterilisierkarussell und das Füllkarussell eine gemeinsame, vertikal angeordnete Rotationsachse, und die Umfänge des Sterilisierkarussells und des Füllkarussells liegen in einer gemeinsamen horizontalen Ebene. In dieser Ausführungsvariante ist das Führen der zu befüllenden Behälter besonders einfach, da sie sich stets in derselben horizontalen Ebene bewegen. Es kann daher auf Vorrichtungen verzichtet werden, die die Behälter in diese Ebene hinein oder aus ihr herausführen.

Denkbar ist es, dass der Umfang des Füllkarussells einen größeren Durchmesser hat als der Umfang des Sterilisierkarussells. Die Bewegungsbahn der Behälter entlang des Sterilisierkarussells könnte damit innerhalb ihrer anschließenden Bewegungsbahn entlang des Füllkarussells liegen. Dies führt zu einem minimalen Platzbedarf für den Rotationsfüller. Der Behälter legt dabei entlang des Füllkarussells einen weiteren Weg zurück als vorher am Sterilisierkarussell. Dies ist zweckmäßig, um zum Befüllen eine längere Bearbeitungszeit zur Verfügung zu haben.

Um das Überführen der Behälter vom Sterilisierkarussell zum Füllkarussell besonders einfach zu gestalten, können die Rotationsrichtungen des Sterilisierkarussells und des Füllkarussells einander genau entgegengesetzt sein. Dies würde über eine entsprechende Gestaltung eines Getriebes an der Rotationsachse ermöglicht.

Es wäre auch möglich, dass die Rotationsachsen des Sterilisierkarussells und des Füllkarussells gegeneinander geneigt sind. Denkbar wäre beispielsweise eine Neigung von bis zu 20° oder 30°. Entsprechend müssten dann die Bewegungsbahnen der Behälter entlang der beiden Karussells gegeneinander geneigt sein. Dabei könnte ein zu befüllender Behälter zunächst in einer Ebene umlaufen, um dann mittels des geneigt angeordneten Karussells aus dieser Ebene herausgehoben zu werden, insbesondere über seine erste Bewegungsbahn hinweg. Denkbar wäre auch der Betrieb in umgekehrter Richtung. Trotz der Neigung des Karussells könnten die Behälter eine vertikale Ausrichtung beibehalten.

Vorzugsweise sind die Sterilisierköpfe und/oder die Füllköpfe verfahrbar zwischen einer Aktivstellung, in der sie mit einer Befüllöffnung eines Behälters korrespondieren, und einer Passivstellung, in der sie von der Befüllöffnung beabstandet sind. Alternativ dazu könnten die Halteelemente verfahrbar sein, um die Behälter an die Sterilisier- und Füllköpfe heranzuführen und sie nach der Bearbeitung von den Köpfen wieder zu entfernen. Die erste Variante bietet den Vorteil, dass die Behälter in geringerem Maße bewegt werden müssen. Auf Grund der notwendigen Zu- und Ableitungen an den Sterilisier- und Füllköpfen kann es jedoch konstruktiv einfacher sein, die Halteelemente mit den Behältern zu bewegen.

Möglich ist es beispielsweise, dass die Sterilisierköpfe und/oder die Füllköpfe hebbar und absenkbar sind. Dabei könnten sie in der angehobenen Stellung ihre Passivstellung einnehmen und von dort aus in eine Aktivstellung abgesenkt werden, in der sie beispielsweise den Behälter an seiner Befüllöffnung beaufschlagen. Auch die Halteelemente könnten hebbar und absenkbar sein

Zweckmäßig ist es, wenn wenigstens eine Kurvensteuerung vorgesehen ist, um das Verfahren der Sterilisierköpfe und/oder der Füllköpfe und/oder der Halteelemente zu steuern. Damit kann deren Bewegung in genau definierter Weise ablaufen.

Die Sterilisierköpfe und/oder die Füllköpfe könnten jeweils an einem Gelenksystem gelagert sein. Dieses Gelenksystem würde den Bewegungsspielraum der Köpfe vorgeben. Es könnte mittels einer Feder so vorgespannt werden, dass die Sterilisierköpfe und/oder Füllköpfe bevorzugt ihre Passivstellung einnehmen. Noch vorteilhafter ist es jedoch, die Vorspannung so zu wählen, dass sie auf die Aktivstellung der Köpfe gerichtet ist. Auf diese Weise könnte eine Andrückkraft erzielt werden, mittels derer der jeweilige Sterilisier- oder Füllkopf an den Behälter angedrückt wird, um einen möglichst dichten Abschluss zu erreichen.

Eine weitere Ausführungsvariante des erfindungsgemäßen Rotationsfüllers besteht darin, dass die Bewegungsbahnen der Behälter entlang des Sterilisierkarussells und des Füllkarussells in Axialrichtung des Rotationsfüllers gegeneinander versetzt sind, insbesondere in Vertikalrichtung. In dieser Ausführungsvariante würde also die Bewegungsbahn der Behälter entlang des Sterilisierkarussells in einer anderen vertikalen Ebene liegen als ihre Bewegungsbahn entlang des Füllkarussells. Beispielsweise könnten die Bewegungsbahnen denselben Durchmesser haben und direkt übereinander angeordnet sein. Bei dieser Ausführungsvariante wären alle Sterilisier- und Füllköpfe an der Peripherie des Rotationsfüllers zugänglich, was ihre Wartung erleichtern könnte.

Das Überführen der Behälter vom Sterilisierkarussell zum Füllkarussell wird zweckmä-ßigerweise von einer Überführvorrichtung durchgeführt. Dabei kann es sich beispielsweise um einen Transportstern mit vergleichsweise kleinem Durchmesser handeln. Liegen die Bewegungsbahnen entlang des Sterilisierkarussells und des Füllkarussells in unterschiedlichen vertikalen Ebenen, so müsste die Überführvorrichtung zusätzlich eine vertikale Bewegung der Behälter hervorrufen.

Für die Anordnung der Halteelemente, die beispielsweise als Griff ausgebildet sein können, sind unterschiedliche Varianten denkbar. In einer Variante ist ein endloses Band oder eine endlose Kette vorgesehen, an der die Halteelemente montiert sind. Beispielsweise könnte an jedem Kettenglied oder an jedem n-ten Kettenglied ein Halteelement befestigt sein. Die Kette könnte dann zunächst am Sterilisierkarussell und anschließend am Füllkarussell entlanglaufen. Dies böte den Vorteil, dass ein Behälter nur einmal von einem Halteelement ergriffen werden muss und dann von diesem Halteelement sowohl während des Sterilisierens, als auch während des Befüllens gehalten wird.

In einer anderen Variante ist eine erste Gruppe von Halteelementen an einem dem Sterilisierkarussell zugeordneten ersten Rotor befestigt, während eine zweite Gruppe von Halteelementen an einem dem Füllkarussell zugeordneten zweiten Rotor befestigt ist. Diese Rotoren könnten den Bewegungen des jeweiligen Karussells sehr genau angepasst werden.

Der erfindungsgemäße Rotationsfüller kann in kontinuierlicher Weise betrieben werden. Dies wird dadurch ermöglicht, dass ein Sterilisier- oder Füllkopf den jeweils zu bearbeitenden Behälter entlang einer bestimmten Wegstrecke begleitet. Der Verschleiß eines solchen Rotationsfüllers ist deutlich geringer als bei einem intervallartigen Betrieb.

Denkbar wäre es schließlich noch, dass die Sterilisierköpfe mit den Füllköpfen identisch sind. In ein und demselben Bearbeitungskopf würden nacheinander das Sterilisieren und das Befüllen durchgeführt. Schafft dieser Bearbeitungskopf als Sterilglocke selbst eine sterile Atmosphäre um die Befüllöffnung des Behälters herum, so könnte auf eine Sterilluft-Spülung des gesamten Rotationsfüllers verzichtet werden, da der Behälter nicht mehr vom Sterilisierkopf zum Füllkopf transportiert werden muss. Auf diese Weise ließen sich die Kosten für den Betrieb des Rotationsfüllers noch einmal senken.

Im Folgenden wird die Erfindung anhand einer Zeichnung näher beschrieben. Im Einzelnen zeigen:
- Figur 1: einen Vertikalschnitt durch ein erstes Ausführungsbeispiel eines erfindungsgemäßen Rotationsfüllers,
- Figur 2: eine schematische Draufsicht auf ein zweites Ausführungsbeispiel eines erfindungsgemäßen Rotationsfüllers, bei dem die Rotationsrichtungen des Sterilisierkarussells und des Füllkarussells gleich sind,
- Figur 3: eine schematische Seitenansicht der Bewegungsbahn der Behälter in dem in Figur 2 gezeigten Ausführungsbeispiel,
- Figur 4: eine schematische Draufsicht auf ein drittes Ausführungsbeispiel des erfindungsgemäßen Rotationsfüllers mit einer endlosen Kette,
- Figur 5: eine schematische Draufsicht auf ein viertes Ausführungsbeispiel eines erfindungsgemäßen Rotationsfüllers,
- Figur 6: eine perspektivische Ansicht eines Ausschnittes aus einem fünften Ausführungsbeispiel eines erfindungsgemäßen Rotationsfüllers,
- Figur 7: einen ersten Vertikalschnitt durch einen Sterilisier- oder Füllkopf des in Figur 6 gezeigten Ausführungsbeispiels, und
- Figur 8: einen zweiten Vertikalschnitt durch den in Figur 7 gezeigten Sterilisier- oder Füllkopf.

Gleiche Bezugszeichen in den Figuren bezeichnen jeweils entsprechende Komponenten.

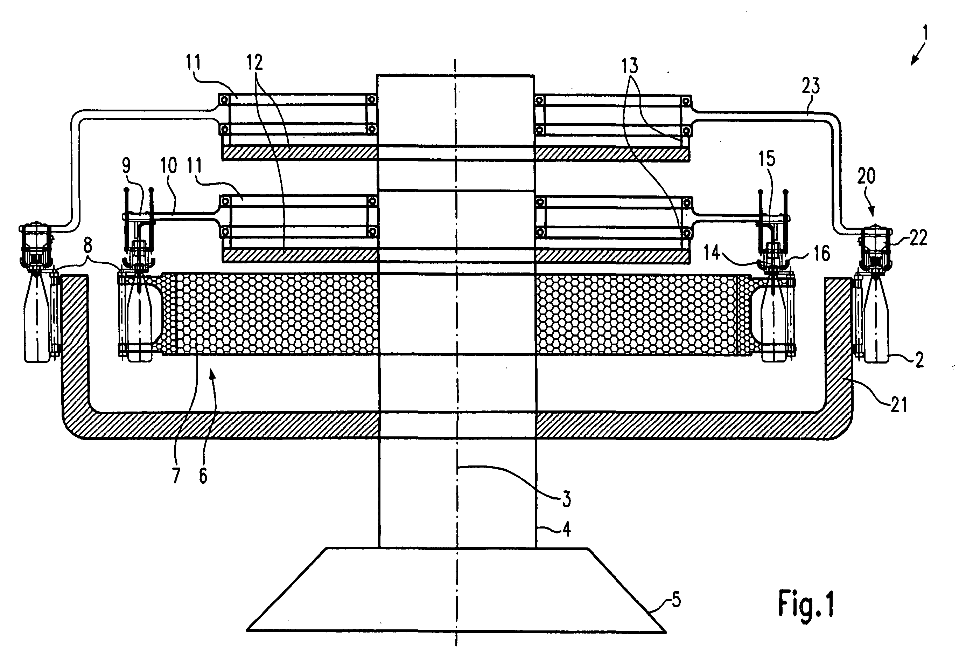

Figur 1 zeigt ein erstes Ausführungsbeispiel eines erfindungsgemäßen Rotationsfüllers 1 zum Befüllen von Behältern 2 mit Flüssigkeiten. Der Rotationsfüller 1 weist eine zentrale Rotationsachse 3 auf, die in dem dargestellten Ausführungsbeispiel vertikal angeordnet ist. Diese Achse 3 ist als Hohlzylinder 4 ausgebildet und ruht auf einem stabilisierenden Sockel 5. Ein Sterilisierkarussell 6 ist um die Rotationsachse 3 drehbar. Das Sterilisierkarussell 6 umfasst einen ersten Rotor 7, an dessen Umfang eine Mehrzahl von Halteelementen 8 befestigt ist. Jedes der als Griff ausgebildeten Halteelemente 8 dient zum Halten und führen eines Behälters 2. Das Sterilisierkarussell 6 umfasst zudem eine der Anzahl der Haltelemente 8 am ersten Rotor 7 etwa entsprechende Anzahl von Sterilisierköpfen 9. Die Sterilisierköpfe 9 sind auf einer Kreisbahn um die Rotationsachse 3 bewegbar.

Jeder Sterilisierkopf 9 ist mittels eines Armes 10 an einem Gelenksystem 11 gelagert. Auf einer statischen Platte 12, die an der Drehbewegung um die Rotationsachse 3 nicht teilnimmt, ist eine Kurvensteuerung 13 vorgesehen. Ein äußerer Abschnitt des Gelenksystems 11 liegt auf der Kurvensteuerung 13 auf. Gegebenenfalls könnte an dem Gelenksystem 11 auch ein Laufrad zum Abrollen auf der Kurvensteuerung 13 vorgesehen sein, um die Reibung zu vermindern. Die Kurvensteuerung 13 weist niedrige und erhöhte Abschnitte auf. In den erhöhten Abschnitten ist ein äußeres Ende des Gelenksystems 11 angehoben. Damit werden gleichzeitig der Arm 10 und der an ihm befestigte Sterilisierkopf 9 angehoben. Der Sterilisierkopf 9 befindet sich dann in einer Passivstellung, in der er von dem Behälter 2 beabstandet ist.

Bewegt sich das äußere Ende des Gelenksystems 11 zum niedrigen Abschnitt der Kurvensteuerung 13, so wird das Gelenksystem 11 abgesenkt. Damit verfahren auch der Arm 10 und der Sterilisierkopf 9 nach unten. Der Sterilisierkopf 9 befindet sich nun in der in Figur 1 gezeigten Aktivstellung. In dieser Stellung umschließt der Sterilisierkopf 9 als Sterilglocke eine Befüllöffnung 14 des Behälters 2. In dieser Aktivstellung kann über den Sterilisierkopf 9 Sterilisierfluid oder Sterilisiergas in das Innere des Behälters 2 injiziert werden. Gegebenenfalls kondensiert das Sterilisierfluid an der Innenwand des Behälters 2 und tötet dabei eventuell vorhandene Keime ab. Über den Sterilisierkopf 9 kann anschließend trockene Sterilluft in den Behälter 2 eingeblasen werden, um das Kondensat zu verdampfen und den Behälter 2 so zu trocknen. Der Sterilisierkopf 9 verfügt über mindestens eine Zuleitung 15 zum Zuleiten von Sterilisierfluid, Sterilluft oder trockener Heißluft, sowie über eine Öffnung 16 zum Abführen des verdampften Kondensats.

Der Rotationsfüller 1 verfügt darüber hinaus über ein Füllkarussell 20, das ähnlich wie das Sterilisierkarussell 6 aufgebaut und um dieselbe Rotationsachse 3 drehbar ist. Das Füllkarussell 20 weist einen zweiten Rotor 21 auf, an dessen Peripherie eine zweite Gruppe von Halteelementen 8 vorgesehen ist. Sie dienen dazu, Behälter 2 auf einer Bewegungsbahn am Füllkarussell 20 zu führen.

Zu jedem Halteelement 8 dieser zweiten Gruppe von Halteelementen korrespondiert ein Füllkopf 22. Analog zu den Sterilisierköpfen 9 ist auch jeder Füllkopf 22 an einem Arm 23 befestigt, der seinerseits wiederum an einem Gelenksystem 11 gelagert ist. Das Gelenksystem 11 des Füllkarussells 20 ist genau so aufgebaut wie das Gelenksystem 11 des Sterilisierkarussells 6. Insbesondere verfügt es ebenfalls über eine Kurvensteuerung 13 auf einer statischen Platte 12, die das Verfahren der Füllköpfe 22 zwischen einer Aktiv- und einer Passivstellung steuert.

In Figur 1 sind zwei Füllköpfe 22 in ihrer Aktivstellung dargestellt, in der die Füllköpfe 22 an einer Befüllöffnung 14 eines Behälters 2 anliegen. Über eine (nicht dargestellte) Zuleitung, die am Gelenksystem 11 befestigt sein kann, und den Füllkopf 22 kann nun eine Flüssigkeit in den Behälter 2 eingefüllt werden.

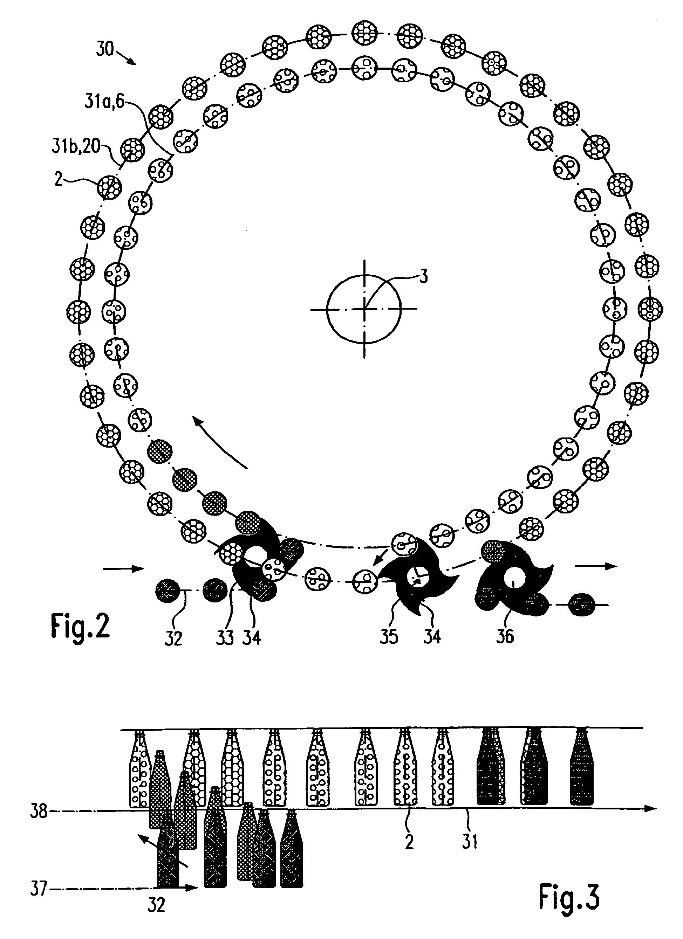

Figur 2 zeigt schematisch ein zweites Ausführungsbeispiel eines erfindungsgemäßen Rotationsfüllers 30. Dargestellt sind dabei die Positionen einer Vielzahl von Behältern 2 auf ihrer Bewegungsbahn 31 entlang eines Sterilisierkarussells 6 und eines Füllkarussells 20. Mittels einer Zuliefervorrichtung 32, beispielsweise einem Transportband, werden die zu befüllenden Behälter 2 dem Rotationsfüller 30 zugeführt. Entlang der Zuliefervorrichtung 32 sind die Behälter 2 auf einer Ebene gehalten, auf der sie vollständig unterhalb derjenigen Ebene angeordnet sind, in der sie sich auf ihrer Bewegungsbahn 31 entlang des Sterilisierkarussells 6 und des Füllkarussells 20 befinden.

Die Zuliefervorrichtung 32 führt die Behälter 2 zu einem Zulieferstern 33. Im dargestellten Ausführungsbeispiel hat der Zulieferstem 33 einen relativ geringen Radius, so dass er lediglich vier Aufnahmepositionen 34 für Behälter 2 bietet. In einer Aufnahmeposition 34 am Zulieferstem 33 vollzieht ein Behälter 2 eine doppelte Bewegung: Zum einen nimmt er teil an einer Rotation um die Achse des Zuliefersterns 33, um auf diese Weise tangential auf seine Bewegungsbahn 31 a am Sterilisierkarussell 6 geführt zu werden. Zum anderen vollzieht der Behälter 2 dabei eine Bewegung in Vertikalrichtung, wobei er um mindestens eine Behälterhöhe angehoben wird. Um dies zu erreichen, kann die Aufnahmeposition 34 als Aufnahmetasche ausgebildet sein, die bei der Rotation um die vertikale Achse des Zuliefersterns 33 gleichzeitig eine Bewegung in Axialrichtung vollzieht. Dies kann über eine entsprechende Kurvensteuerung am Zulieferstern 33 erfolgen.

Entlang des Sterilisierkarussells 6 wird der Behälter 2 auf einer kreisförmigen Bewegungsbahn 31 a um die Rotationsachse 3 des Sterilisierkarussells 6 herumgeführt. Während seiner Verweildauer auf dieser Bewegungsbahn 31 a wird der Behälter 2 über einen Sterilisierkopf 9 sterilisiert. Nachdem er fast einen vollständigen Kreis durchlaufen hat, wird der Behälter 2 von einer Überführvorrichtung 35 erfasst, um auf das Füllkarussell 20 überführt zu werden. In dem in Figur 2 gezeigten Ausführungsbeispiel ist die Überführvorrichtung 35 als Transportstem ausgebildet. Ebenso wie der Zulieferstem 33 hat auch die Überführvorrichtung 35 vier Aufnahmepositionen 34 für je einen Behälter 2. Die vertikale Position des Behälters 2 wird in der Überführvorrichtung 35 nicht verändert.

Entlang des Füllkarussells 20 ist die Bewegungsbahn 31 b des Behälters 2 ebenfalls kreisförmig. Dieser Abschnitt 31 b seiner Bewegungsbahn ist konzentrisch zu dem Bewegungsbahn-Abschnitt 31 a am Sterilisierkarussell 6, da sich das Sterilisierkarussell 6 und das Füllkarussell 20 um dieselbe Rotationsachse 3 drehen. Der Radius der Bewegungsbahn 31 b ist jedoch am Füllkarussell 20 größer. Während der Behälter 2 diesen Abschnitt 31 b seiner Bewegungsbahn am Füllkarussell 20 durchläuft, wird er mittels eines Füllkopfes 22 befüllt. In diesem Ausführungsbeispiel ist seine Rotationsrichtung um die Rotationsachse 3 dabei entlang des Füllkarussells 20 dieselbe wie am Sterilisierkarussell 6. In der dargestellten Draufsicht erfolgt die Rotation jeweils im Uhrzeigersinn.

Nachdem der Behälter 2 am Füllkarussell 20 nahezu einen vollständigen Kreis durchlaufen hat, wird er schließlich von einem Entnahmestem 36 erfasst, der ihn vom Rotationsfüller 30 abnimmt. Der Behälter 2 kann anschließend zu weiteren Bearbeitungseinrichtungen geführt werden.

Figur 3 zeigt eine schematische Seitenansicht der Bewegungsbahn 31 der Behälter 2 am Zulieferstem 33 des in Figur 2 gezeigten Rotationsfüllers 30. Dabei sind weder die Zuliefervorrichtungen 32, noch der Zulieferstern 33 oder der Rotationsfüller 30 dargestellt, sondern lediglich eine Anzahl von Behältern 2 entlang ihrer Bewegungsbahn 31.

Zunächst befinden sich die Behälter 2 an der Zuliefervorrichtung 32 auf einer unteren Ebene 37. Wie vorstehend bereits beschrieben, werden sie am Zulieferstem 33 auf eine obere Ebene 38 angehoben, die um mindestens eine Behälterlänge höher liegt als die untere Ebene 37. Bei ihrem Durchlauf durch das Sterilisierkarussell 6 und das Füllkarussell 20 verbleiben die Behälter 2 auf dieser oberen Ebene 38, bis sie den Entnahmestem 36 erreichen und vom Rotationsfüller 30 abgenommen werden. Die Höhendifferenz zwischen der unteren Ebene 37 und der oberen Ebene 38 erlaubt es dabei, dass die Behälter 2 ihre eigene Bewegungsbahn am Zulieferstem 33 überqueren.

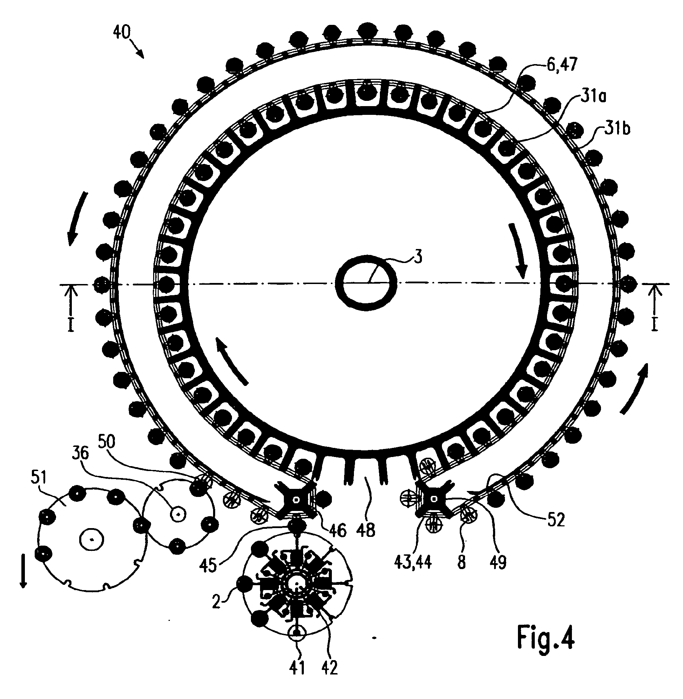

In Figur 4 ist schematisch ein drittes Ausführungsbeispiel eines erfindungsgemäßen Rotationsfüllers 40 dargestellt. In einem Einlaufpunkt 41 werden die zu befüllenden Behälter 2 von einem Sprühkarussell 42 erfasst. Während die Behälter 2 etwa einen halben Umlauf um das Sprühkarussell 42 vollziehen, wird mittels eines Sprühkopfes Sterilisierfluid in sie hineingesprüht. Das Sterilisierfluid kondensiert auf der Innenseite des Behälters 2.

Am Rotationsfüller 40 ist eine endlose Kette 43 vorgesehen. An jedem Kettenglied 44 dieser Kette 43 befindet sich ein Halteelement 8 zum Halten eines Behälters 2. Der Rotationsfüller 40 und das Sprühkarussell 42 sind derart synchronisiert, dass jedes Halteelement 8 an einer Übergabeposition 45 einen vom Sprühkarussell 42 herangeführten Behälter 2 erfasst. Mittels eines Kettenumlenkers 46 wird die Kette 43 mit dem gerade erfassten Behälter 2 zunächst zum Sterilisierkarussell 6 geführt. Dieses verfügt in dem dargestellten dritten Ausführungsbeispiel über einen Sterilisierrotor 47, der an seiner Peripherie eine Vielzahl von Sterilisiertaschen 48 aufweist. Jede Sterilisiertasche 48 dient zur Aufnahme eines Behälters 2. Die Sterilisiertasche 48 kann mittels eines Kettengliedes 44 so verschlossen werden, dass in der Sterilisiertasche 48 eine sterile Umgebung für den Behälter 2 gebildet werden kann. In dieser Umgebung erfolgt das Sterilisieren des Behälters 2, indem das aufgesprühte Sterilisierfluid im Behälter 2 kondensiert und gegebenenfalls anschließend mittels Heißluft verdampft wird.

Am Sterilisierkarussell 6 durchlaufen die Behälter 2 nahezu eine vollständige Kreisbahn, bevor die Kette 43 über einen zweiten Kettenumlenker 49 läuft. Die Behälter 2, die an den Halteelementen 8 befestigt sind und dem Lauf der Kette 43 folgen, werden so auf eine weitere Kreisbahn geführt. Auf diesem Abschnitt 31 b korrespondiert die Bewegung eines Behälters 2 mit derjenigen eines Füllkopfes 22 des Füllkarussells 20. Während die Bewegung der Behälter auf dem Abschnitt 31 a ihrer Bewegungsbahn 31 am Sterilisierkarussell 6 in Uhrzeigerrichtung verläuft, verläuft die Bewegung auf dem Bahnabschnitt 31 b am Füllkarussell 20 gegen den Uhrzeigersinn. Dies erleichtert die Überführung der Behälter vom Sterilisierkarussell 6 zum Füllkarussell 20 mittels des zweiten Kettenumlenkers 49. Diese Überführung wird weiter dadurch erleichtert, dass ein einmal von einem Halteelement 8 ergriffener Behälter 2 an diesem Halteelement 8 sowohl bei seinem Umlauf um das Sterilisierkarussell 6, als auch beim Umlauf um das Füllkarussell 20 gehalten bleibt. Der Behälter 2 muss also nicht mehr an einen Übergabestem und von dort an ein weiteres Halteelement 8 übergeben werden.

Am Füllkarussell 20 durchläuft der Behälter 2 einen kreisförmigen Bahnabschnitt 31 b über etwa 310⁰, bis er an einer Entnahmeposition 50 von einem Entnahmestern 36 erfasst wird. Der Entnahmestem 36 führt den Behälter 2 zu einem Verschließkarussell 51. Am Verschließkarussell 51 wird auf die Befüllöffnung 14 jedes Behälters 2 ein Verschluss aufgesetzt.

Ein Vertikalschnitt entlang der in Figur 4 mit I-I bezeichneten Ebene könnte so aussehen wie die in Figur 1 gezeigte Ansicht. Dabei würde der erste Rotor 7 durch den Sterilisierrotor 47 ersetzt. Der zweite Rotor 21 bliebe statisch und würde als Anlagefläche 52 für die endlose Kette 43 dienen.

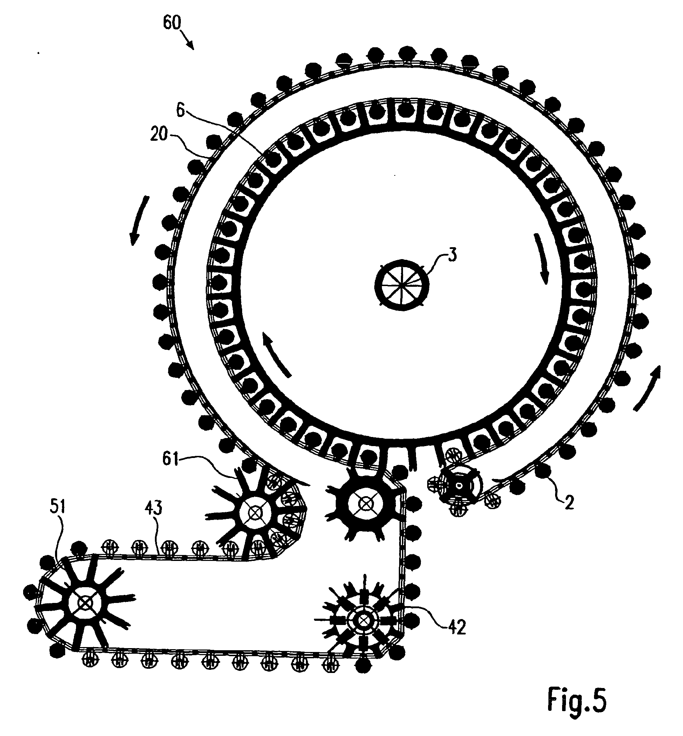

Figur 5 zeigt ein viertes Ausführungsbeispiel eines erfindungsgemäßen Rotationsfüllers 60. Dieses Ausführungsbeispiel entspricht weitgehend dem in Figur 4 gezeigten Rotationsfüller 40. Der Unterschied besteht darin, dass die endlose Kette 43 bei dem in Figur 5 gezeigten Rotationsfüller 60 länger ist. Sie führt die zu füllenden Behälter nicht nur am Sterilisierkarussell 6 und am Füllkarussell 20 entlang, sondern darüber hinaus auch am Sprühkarussell 42 sowie nach einem Zwischenstem 61 auch über das Verschließkarussell 51. Sobald ein Behälter 2 von einem Halteelement 8 an einem Kettenglied 44 erfasst worden ist, kann er während seiner gesamten Bearbeitung, d.h. vom Besprühen mit Sterilisierfluid, über das Trocknen und Befüllen bis hin zum Verschließen, von diesem Halteelement 8 gehalten werden. Konstruktiv aufwändige Übergabevorrichtungen werden so vermieden.

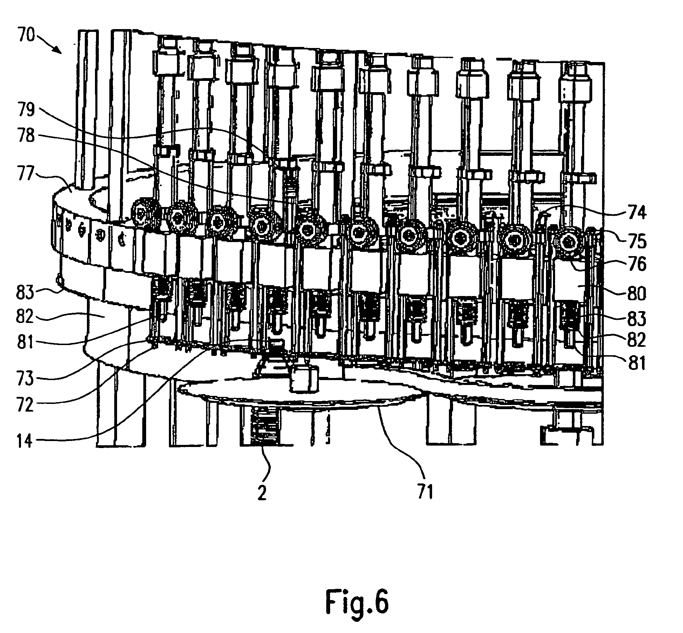

Figur 6 zeigt perspektivisch einen Ausschnitt aus einem fünften Ausführungsbeispiel eines erfindungsgemäßen Rotationsfüllers 70. Insbesondere ist hier das Füllkarussell 20 dargestellt. Im Unterschied zu dem in Figur 1 gezeigten Ausführungsbeispiel werden beim Rotationsfüller 70 nicht die Sterilisier- und Füllköpfe zum Behälter 2 gefahren, sondem umgekehrt der Behälter 2 mittels des Halteelementes 8 zum Sterilisier- beziehungsweise Füllkopf 80.

Mittels eines Einlaufsterns 71 werden die zu befüllenden Behälter 2 an das Füllkarussell des Rotationsfüllers 70 herangeführt. In ihrem Halsbereich werden die Behälter 2 von einem als Zange ausgebildeten Halteelement 72 ergriffen. Dabei nehmen die Behälter 2 eine aufrechte Position ein, in der ihre Befüllöffnung 14 nach oben weist.

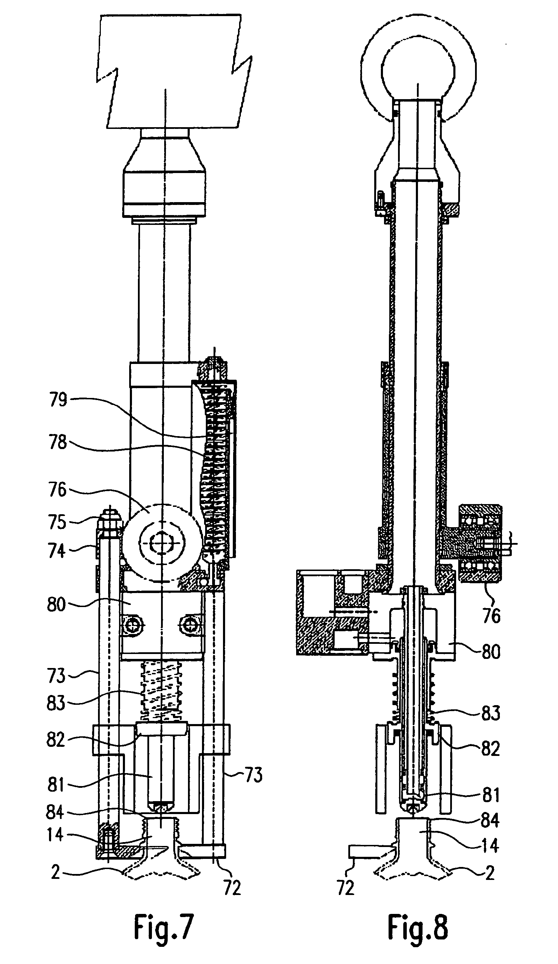

Die Halteelemente 72 sind jeweils an zwei vertikal nach oben weisenden Stangen 73 befestigt. An ihrem oberen Ende sind die beiden Stangen 73 mittels eines Querträgers 74 verbunden. Im dargestellten Ausführungsbeispiel sind Schrauben 75 vorgesehen, um die Stangen 73 am Querträger 74 anzuschrauben. Im Detail ist dies noch einmal in den Vertikalschnitten in Fig. 7 und Fig. 8 gezeigt.

Seitlich am Querträger 74 ist eine Rolle 76 befestigt, die um eine horizontale Achse drehbar ist. Bei der Rotation des hier gezeigten Füllkarussells 20 rollt die Rolle 76 auf einer Kurvensteuerung 77 ab, um die Halteelemente 72 zwischen einer Aktiv- und einer Passivstellung zu verfahren.

In Figur 6 befinden sich alle dargestellten Rollen 76 auf einem tiefliegenden Abschnitt der Kurvensteuerung 77. Die Halteelemente sind dabei in ihre Passivstellung abgesenkt, in der sie einen Behälter 2 aufnehmen können. Rollt die Rolle 76 nun auf einen höherliegenden Abschnitt der Kurvensteuerung 77, so führt sie den Querträger 74 mit sich nach oben. Dadurch bedingt werden auch die Stangen 73 und die an ihnen befestigten Halteelemente 72 vertikal nach oben angehoben. Diese Bewegung nach oben erfolgt gegen die Kraft einer Rückstellfeder 78, die in einem vertikalen Gehäuse 79 angeordnet ist und bei der beschriebenen Bewegung zusammengedrückt wird. Die Rückstellfeder 78 ist in Figur 6 der Übersichtlichkeit halber nur einmal dargestellt. Die Rückstellfeder 78 bewirkt also, dass die Halteelemente 72 auf ihre Passivstellung hin vorgespannt sind.

Jedem Halteelement 72 ist ein Füllkopf 80 zugeordnet, der sich mit derselben Winkelgeschwindigkeit wie die Halteelemente 72 um die Rotationsachse 3 herum bewegt. In vertikaler Richtung sind die Füllköpfe 80 jedoch nicht beweglich. Verfährt das Halteelement 72 nach oben, so wird der darin erfasste Behälter 2 somit gegen den Füllkopf 80 bewegt. Am Füllkopf 80 ist ein zylinderförmiger Füllstutzen 81 vorgesehen, dessen Außendurchmesser etwas geringer ist als der Innendurchmesser des Behälterhalses. Auf seiner Außenseite ist ein ringförmiges Dichtelement 82 vorgesehen, das mittels einer Feder 83 nach unten vorgespannt ist.

Verfährt das Halteelement 72 bedingt durch die Kurvensteuerung 77 mit dem Behälter 2 in die Aktivstellung, so schiebt sich der Behälter 2 mit seinem Hals auf den Füllstutzen 81 auf. Der Rand 84 der Behälteröffnung 14 beaufschlagt das Dichtelement 82, so dass die Füllöffnung 14 bis auf einen kleinen Spalt zum Druckausgleich verschlossen wird. In dieser Aktivstellung kann der Behälter 2 nun über den Füllstutzen 81 befüllt werden.

Im Anschluss an die Befüllung bewegt sich das Halteelement 72 wieder in seine Passivstellung, wenn die Rolle 76 auf einen tieferliegenden Abschnitt der Kurvensteuerung 77 läuft. Unterstützt durch die Kraft der Rückstellfeder 78 bewegen sich die Stangen 73 mit dem Halteelement 72 nach unten. Der Hals des Behälters 2 löst sich vom Füllstutzen 81. Der befüllte Behälter 2 muss nun nur noch verschlossen werden.

Ausgehend von den dargestellten Ausführungsbeispielen kann der erfindungsgemäße Rotationsfüller in vielfacher Hinsicht abgewandelt werden. Wie bereits erwähnt, könnten die kreisförmigen Bewegungsbahnen der Behälter am Sterilisierkarussell und am Füllkarussell in zwei unterschiedlichen horizontalen Ebenen übereinander liegen. Ebenso könnte die Bewegungsebene am Sterilisierkarussell oder am Füllkarussell gegenüber der Horizontalen geneigt sein, um die Behälter in eine andere Ebene zu befördern, während sie sterilisiert oder befüllt werden. Um die Behälter und den jeweiligen Sterilisier- oder Füllkopf in ihre Aktivstellungen zueinander zu bringen, wären generell drei unterschiedliche Varianten denkbar: Der jeweilige Kopf könnte bewegt werden (Figur 1), die Halteelemente könnten bewegt werden (Figuren 6 bis 8) oder es könnten auch sowohl die Köpfe, als auch die Halteelemente aufeinander zu bewegt werden.

Die Bewegungsbahnen entlang des Sterilisierkarussells und des Füllkarussells müsste nicht notwendigerweise eine Kreisform haben. Denkbar wären auch andere Formen wie ein Oval, eine Ellipse oder eher rechteckige Formen. Allerdings müssten bei solch einer Ausführungsvariante die Sterilisier- und Füllköpfe auf einer korrespondierenden Bahn geführt werden, beispielsweise an einer Kette. Daher wäre ihre Positionierung gegenüber den Behältern schwieriger. Zudem wäre die Stabilität eines solchen Rotationsfüllers geringer als bei den dargestellten Ausführungsbeispielen, bei denen die Sterilisier- und Befüllköpfe an Rotoren befestigt sind. Daher werden kreisförmige Bewegungsbahnen in jedem Fall bevorzugt.

## Patentansprüche

1. Rotationsfüller (1, 30, 40, 60, 70) für Behälter (2), insbesondere Flaschen, mit einem Sterilisierkarussell (6), das um eine Rotationsachse (3) drehbar ist und an dessen Umfang eine Vielzahl von Sterilisierköpfen (9) zum Sterilisieren der Behälter (2) angeordnet ist, ferner mit einem Füllkarussell (20), an dessen Umfang eine Vielzahl von Füllköpfen (22, 80) zum Befüllen der Behälter (2) angeordnet ist, sowie mit einer Vielzahl von Halteelementen (8) zum Halten und Führen je eines Behälters, wobei Bewegungsbahnen (31) der Halteelemente (8) wenigstens abschnittsweise mit den Bewegungsbahnen der Sterilisierköpfe (9) und/oder der Füllköpfe (22) korrespondieren, um die Behälter zu den Sterilisierköpfen und/oder Füllköpfen zu führen, und wobei die Rotationsachse (3) des Sterilisierkarussells (6) im Wesentlichen mit der Rotationsachse des Füllkarussells (20) übereinstimmt, so dass die Umfänge des Sterilisierkarussells (6) und des Füllkarussells (20) im Wesentlichen zueinander konzentrisch sind, **dadurch gekennzeichnet, dass** das Sterilisierungskarussell (6) und das Füllkarussell (20) als separate Baugruppen des Rotationsfüllers (1,30,40,60,70) ausgebildet sind.

2. Rotationsfüller nach Anspruch 1, **dadurch gekennzeichnet, dass** die gemeinsame Rotationsachse (3) vertikal liegt und die Umfänge des Sterilisierkarussells (6) und des Füllkarussells (20) in einer gemeinsamen horizontalen Ebene liegen.

3. Rotationsfüller nach Anspruch 2, **dadurch gekennzeichnet, dass** der Umfang des Füllkarussells (20) einen größeren Durchmesser hat als der Umfang des Sterilisierkarussells (6).

4. Rotationsfüller nach einem der vorangehenden Ansprüche, **dadurch gekennzeichnet, dass** Rotationsrichtungen des Sterilisierkarussells (6) und des Füllkarussells (20) einander entgegengesetzt sind.

5. Rotationsfüller nach einem der vorangehenden Ansprüche, **dadurch gekennzeichnet, dass** die Halteelemente (8) verfahrbar sind zwischen einer Aktivstellung, in der die Sterilisierköpfe (9) und/oder die Füllköpfe (22, 80) mit einer Befüllöffnung (14) eines Behälters (2) korrespondieren, und einer Passivstellung, in der die Sterilisierköpfe (9) bzw. die Füllköpfe (22, 80) von der Befüllöffnung (14) beabstandet sind.

6. Rotationsfüller nach einem der vorangehenden Ansprüche, **dadurch gekennzeichnet, dass** die Sterilisierköpfe (9) und/oder die Füllköpfe (22, 80) verfahrbar sind zwischen einer Aktivstellung, in der sie mit einer Befüllöffnung (14) eines Behälters (2) korrespondieren, und einer Passivstellung, in der sie von der Befüllöffnung (14) beabstandet sind.

7. Rotationsfüller nach einem der Ansprüche 5 oder 6, **dadurch gekennzeichnet, dass** die Sterilisierköpfe (9) und/oder die Füllköpfe (22, 80) und/oder die Halteelemente (8) hebbar und absenkbar sind.

8. Rotationsfüller nach einem der Ansprüche 5 bis 7, **dadurch gekennzeichnet, dass** mindestens eine Kurvensteuerung (13, 77) vorgesehen ist, um das Verfahren der Sterilisierköpfe (9) und/oder der Füllköpfe (22) und/oder der Halteelemente (8) zu steuern.

9. Rotationsfüller nach einem der Ansprüche 6 bis 8, **dadurch gekennzeichnet, dass** die Sterilisierköpfe (9) und/oder die Füllköpfe (22, 80) jeweils an einem Gelenksystem (11) gelagert sind.

10. Rotationsfüller nach Anspruch 9, **dadurch gekennzeichnet, dass** wenigstens ein Gelenksystem (11) mittels einer Feder vorgespannt ist.

11. Rotationsfüller nach einem der vorangehenden Ansprüche, **dadurch gekennzeichnet, dass** die Bewegungsbahnen (31a, 31b) der Behälter (2) entlang des Sterilisierkarussells (6) und des Füllkarussells (20) in Axialrichtung der Rotationsachse (3) des Rotationsfüllers gegeneinander versetzt sind, insbesondere in Vertikalrichtung.

12. Rotationsfüller nach einem der vorangehenden Ansprüche, **gekennzeichnet durch** eine Überführvorrichtung (35, 49) zum Überführen der Behälter (2) vom Sterilisierkarussell (6) zum Füllkarussell (20).

13. Rotationsfüller nach einem der vorangehenden Ansprüche, **dadurch gekennzeichnet, dass** am Rotationsfüller entlang der Bewegungsbahn der Halteelemente (8) eine endlose Kette (43) vorgesehen ist, an der die Halteelemente (8) montiert sind.

14. Rotationsfüller nach einem der Ansprüche 1 bis 12, **dadurch gekennzeichnet, dass** eine erste Gruppe von Halteelementen (8) an einem dem Sterilisierkarussell (6) zugeordneten ersten Rotor (7) befestigt ist, während eine zweite Gruppe von Halteelementen (8) an einem dem Füllkarussell (20) zugeordneten zweiten Rotor (21) befestigt ist.

15. Rotationsfüller nach einem der vorangehenden Ansprüche, **dadurch gekennzeichnet, dass** die Sterilisierköpfe (9) mit den Füllköpfen (22, 80) identisch sind.

## Claims

1. Rotary filling machine (1, 30, 40, 60, 70) for containers (2), in particular bottles, with a sterilizing carousel (6) which is rotatable about a rotation axis (3) and on whose circumference a large number of sterilizing heads (9) are arranged for sterilizing the containers (2), and with a filling carousel (20) on whose circumference a large number of filling heads (22, 80) are arranged for filling the containers (2), and with a large number of holding elements (8) for holding and guiding a respective container, where movement trajectories (31) of the holding elements (8) correspond at least in some areas to the movement trajectories of the sterilizing heads (9) and/or of the filling heads (22) in order to guide the containers to the sterilizing heads and/or filling heads, and where the rotation axis (3) of the sterilizing carousel (6) coincides substantially with the rotation axis of the filling carousel (20), such that the circumferences of the sterilizing carousel (6) and of the filling carousel (20) are substantially concentric to one another, **characterized in that** the sterilizing carousel (6) and the filling carousel (20) are designed as separate structural groups of the rotary filling machine (1, 30, 40, 60, 70).

2. Rotary filling machine according to Claim 1, **characterized in that** the common rotation axis (3) lies vertically, and the circumferences of the sterilizing carousel (6) and of the filling carousel (20) lie in a common horizontal plane.

3. Rotary filling machine according to Claim 2, **characterized in that** the circumference of the filling carousel (20) has a greater diameter than the circumference of the sterilizing carousel (6).

4. Rotary filling machine according to one of the preceding claims, **characterized in that** rotation directions of the sterilizing carousel (6) and of the filling carousel (20) run counter to one another.

5. Rotary filling machine according to one of the preceding claims, **characterized in that** the holding elements (8) are movable between an active position, in which the sterilizing heads (9) and/or the filling heads (22, 80) coincide with a fill opening (14) of a container (2), and a passive position, in which the sterilizing heads (9) and the filling heads (22, 80) are distanced from the fill opening (14).

6. Rotary filling machine according to one of the preceding claims, **characterized in that** the sterilizing heads (9) and/or the filling heads (22, 80) are movable between an active position, in which they coincide with a fill opening (14) of a container (2), and a passive position, in which they are distanced from the fill opening (14).

7. Rotary filling machine according to either of Claims 5 and 6, **characterized in that** the sterilizing heads (9) and/or the filling heads (22, 80) and/or the holding elements (8) can be raised and lowered.

8. Rotary filling machine according to one of Claims 5 to 7, **characterized in that** at least one cam control (13, 77) is provided for controlling the movement of the sterilizing heads (9) and/or of the filling heads (22) and/or of the holding elements (8).

9. Rotary filling machine according to one of Claims 6 to 8, **characterized in that** the sterilizing heads (9) and/or the filling heads (22, 80) are each mounted on an articulation system (11).

10. Rotary filling machine according to Claim 9, **characterized in that** at least one articulation system (11) is pretensioned by means of a spring.

11. Rotary filling machine according to one of the preceding claims, **characterized in that** the movement trajectories (31a, 31b) of the containers (2) along the sterilizing carousel (6) and the filling carousel (20) are mutually offset in the axial direction of the rotation axis (3) of the rotary filling machine, in particular in the vertical direction.

12. Rotary filling machine according to one of the preceding claims, **characterized by** a transfer device (35, 49) for transferring the containers (2) from the sterilizing carousel (6) to the filling carousel (20).

13. Rotary filling machine according to one of the preceding claims, **characterized in that** a continuous chain (43), on which the holding elements (8) are mounted, is provided on the rotary filling machine along the movement trajectory of the holding elements (8).

14. Rotary filling machine according to one of Claims 1 to 12, **characterized in that** a first group of holding elements (8) is secured on a first rotor (7) assigned to the sterilizing carousel (6), while a second group of holding elements (8) is secured on a second rotor (21) assigned to the filling carousel (20).

15. Rotary filling machine according to one of the preceding claims, **characterized in that** the sterilizing heads (9) are identical to the filling heads (22, 80).

## Revendications

1. Remplisseur rotatif (1, 30, 40, 60, 70) pour des conteneurs (2), en particulier pour des bouteilles, pourvu d'un carrousel de stérilisation (6), qui peut tourner autour d'un axe de rotation (3) et sur la périphérie duquel une pluralité de têtes de stérilisation (9) destinées à la stérilisation des conteneurs (2) est disposée, pourvu en outre d'un carrousel de remplissage (20), sur la périphérie duquel une pluralité de têtes de remplissage (22, 80) destinées au remplissage des conteneurs (2) est disposée, ainsi que d'une pluralité d'éléments de support (8) destinés chacun au support et au guidage d'un conteneur, les rails de déplacement (31) des éléments de support (8) correspondant au moins sur la section transversale avec les rails de déplacement des têtes de stérilisation (9) et/ou des têtes de remplissage (22), pour amener les récipients sur les têtes de stérilisation et/ou les têtes de remplissage, et dans lequel l'axe de rotation (3) du carrousel de stérilisation (6) correspond sensiblement à l'axe de rotation du carrousel de remplissage (20), de manière à ce que les périphéries du carrousel de stérilisation (6) et du carrousel de remplissage (20) soient sensiblement concentriques l'une par rapport à l'autre, **caractérisé en ce que** le carrousel de stérilisation (6) et le carrousel de remplissage (20) sont conçus comme des composants distincts du remplisseur rotatif (1, 30, 40, 60, 70).

2. Remplisseur rotatif selon la revendication 1, **caractérisé en ce que** l'axe de rotation commun (3) se trouve à la verticale et les périphéries du carrousel de stérilisation (6) et du carrousel de remplissage (20) se trouvent dans un niveau horizontal commun.

3. Remplisseur rotatif selon la revendication 2, **caractérisé en ce que** la périphérie du carrousel de remplissage (20) présente un diamètre supérieur à celui du carrousel de stérilisation (6).

4. Remplisseur rotatif selon l'une des revendications précédentes, **caractérisé en ce que** les sens de rotation du carrousel de stérilisation (6) et du carrousel de remplissage (20) sont opposés.

5. Remplisseur rotatif selon l'une des revendications précédentes, **caractérisé en ce que** les éléments de support (8) peuvent être déplacés entre une position active, dans laquelle les têtes de stérilisation (9) et/ou les têtes de remplissage (22, 80) correspondent avec un orifice de remplissage (14) d'un conteneur (2), et une position passive, dans laquelle les têtes de stérilisation (9) ou les têtes de remplissage (22, 80) sont distantes de l'orifice de remplissage (14).

6. Remplisseur rotatif selon l'une des revendications précédentes, **caractérisé en ce que** les têtes de stérilisation (9) et/ou les têtes de remplissage (22, 80) peuvent être déplacées entre une position active, dans laquelle elles correspondent avec un orifice de remplissage (14) du conteneur (2) et une position passive, dans laquelle elles sont distantes de l'orifice de remplissage (14).

7. Remplisseur rotatif selon l'une des revendications 5 ou 6, **caractérisé en ce que** les têtes de stérilisation (9) et/ou les têtes de remplissage (22, 80) et/ou les éléments de support (8) peuvent être montés et abaissés.

8. Remplisseur rotatif selon l'une des revendications 5 à 7, **caractérisé en ce qu'**au moins une commande en courbe (13, 77) est prévue, pour commander le procédé des têtes de stérilisation (9) et/ou des têtes de remplissage (22) et/ou des éléments de support (8).

9. Remplisseur rotatif selon l'une des revendications 6 à 8, **caractérisé en ce que** les têtes de stérilisation (9) et/ou les têtes de remplissage (22, 80) sont respectivement disposées sur un système articulé (11).

10. Remplisseur rotatif selon la revendication 9, **caractérisé en ce qu'**au moins un système articulé (11) est prétendu au moyen d'un ressort.

11. Remplisseur rotatif selon l'une des revendications précédentes, **caractérisé en ce que** les rails de déplacement (31a, 31b) des conteneurs (2) sont décalés l'un par rapport à l'autre le long du carrousel de stérilisation (6) et du carrousel de remplissage (20) en direction axiale de l'axe de rotation (3) du remplisseur rotatif, en particulier en direction verticale.

12. Remplisseur rotatif selon l'une des revendications précédentes, **caractérisé par** un dispositif de transmission (35, 49) destiné à transmettre les conteneurs (2) du carrousel de stérilisation (6) au carrousel de remplissage (20).

13. Remplisseur rotatif selon l'une des revendications précédentes, **caractérisé en ce qu'**une chaîne sans fin (43), sur laquelle les éléments de support (8) sont montés, est prévue sur le remplisseur rotatif le long du rail de déplacement des éléments de support (8).

14. Remplisseur rotatif selon l'une des revendications 1 à 12, **caractérisé en ce qu'**un premier groupe d'éléments de support (8) est fixé à un premier rotor (7) associé au carrousel de stérilisation (6), tandis qu'un second groupe d'éléments de support (8) est fixé à un second rotor (21) associé au carrousel de remplissage (20).

15. Remplisseur rotatif selon l'une des revendications précédentes, **caractérisé en ce que** les têtes de stérilisation (9) sont identiques aux têtes de remplissage (22, 80).
